# EUROPEAN PATENT SPECIFICATION

(11) **EP 2 759 104 B1**
(45) Date of publication and mention of the grant of the patent: **21.06.2017**
(21) Application number: 12833040.4
(22) Date of filing: 20.09.2012
(51) Int. Cl.: H04L 12/801, H04L 12/911, H04L 12/24, H04L 12/26, H04L 12/917, H04L 12/803, H04L 12/813

(54) **COMMUNICATION APPARATUS, COMMUNICATION SYSTEM, COMMUNICATION CONTROL METHOD, AND PROGRAM**
KOMMUNIKATIONSVORRICHTUNG, KOMMUNIKATIONSSYSTEM, KOMMUNIKATIONSSTEUERUNGSVERFAHREN UND PROGRAMM
APPAREIL DE COMMUNICATION, SYSTÈME DE COMMUNICATION, PROCÉDÉ DE COMMANDE DE COMMUNICATION ET PROGRAMME

(30) Priority: 21.09.2011 JP 2011206460
(43) Date of publication of application: 30.07.2014
(73) Proprietor: NEC Corporation, Tokyo 108-8001 (JP)
(72) Inventor: AKIYOSHI, Ippei, Tokyo, 108-8001 (JP); MIZUKOSHI, Yasuhiro, Tokyo, 108-8001 (JP); ITOH, Nobuhiko, Tokyo, 108-8001 (JP)
(74) Representative: Robson, Aidan John
(86) International application number: PCT/JP2012/005962
(87) International publication number: WO 2013/042358

(56) References cited:
- JP-A- 2003 224 598
- JP-A- 2008 236 230
- US-A1- 2001 039 576
- "OpenFlow Switch Specification", , 28 February 2011 (2011-02-28), pages 1-56, XP055132070, Retrieved from the Internet: URL:http://archive.openflow.org/documents/ openflow-spec-v1.1.0.pdf [retrieved on 2014-01-24]
- ANDREW R CURTIS ET AL: "DevoFlow", SIGCOMM, ACM, 2 PENN PLAZA, SUITE 701 NEW YORK NY 10121-0701 USA, 15 August 2011 (2011-08-15), pages 254-265, XP058006656, DOI: 10.1145/2018436.2018466 ISBN: 978-1-4503-0797-0
- RICHARD WANG DANA BUTNARIU AND JENNIFER REXFORD PRINCETON UNIVERSITY ET AL: "OpenFlow-Based Server Load Balancing Gone Wild", USENIX,, 2 March 2011 (2011-03-02), pages 1-6, XP061010072, [retrieved on 2011-03-02]

## Description

### TECHNICAL FIELD

The present invention relates to a communication apparatus, a communication system, a communication control method, and a program. In particular, it relates to a communication apparatus, a communication system, a communication control method, and a program that process an incoming packet in accordance with a control operation from a control apparatus.

### BACKGROUND OF THE INVENTION

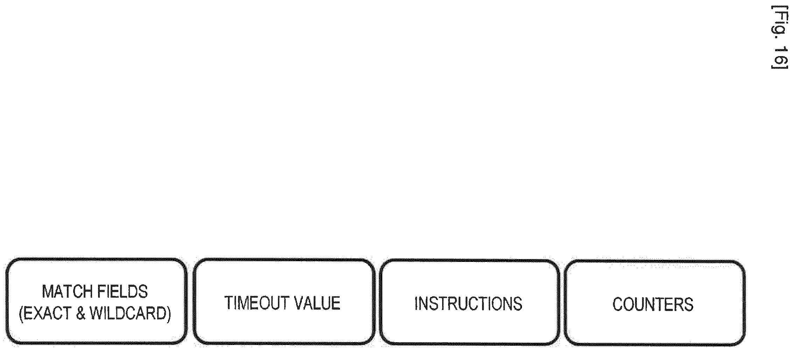

Recently, a technique referred to as OpenFlow has been proposed (see International Patent Publication No. WO2008/095010 and Nick McKeown, and seven others, "OpenFlow: Enabling Innovation in Campus Networks", [online], [Searched on July 26, 2011], Internet <URL: http://www.openflow.org/documents/openflow-wp-latest.pdf> and "OpenFlow Switch Specification" Version 1.1.0 Implemented (Wire Protocol 0x02) [online], [Searched on July 26, 2011], Internet <URL: http://www.openflow.org/documents/openflow-spec-v1.1.0.pdf>). OpenFlow recognizes communications as end-to-end flows and performs path control, failure recovery, load balancing, and optimization on a per-flow basis. An OpenFlow switch specified in the OpenFlow Switch Specification has a secure channel for communication with an OpenFlow controller and operates according to a flow table suitably added or rewritten by the OpenFlow controller. In a flow table, a set of the following three is defined for each flow: match fields that define conditions for matching a packet header; statistical information (counters); and instructions that define processing contents (see Fig. 16).

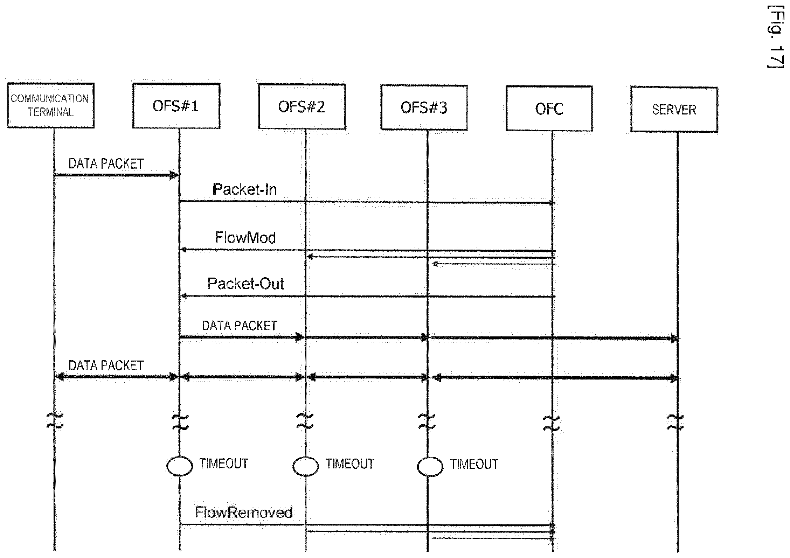

For example, if the OpenFlow switch receives a packet (data packet in Fig. 17), the OpenFlow switch searches the flow table for an entry having a match field that matches header information of the incoming packet. If the OpenFlow switch finds an entry matching the incoming packet as a result of the search, the OpenFlow switch updates the statistical information (counters) and processes the incoming packet based on a processing content (transmission, flooding, drop, etc. of a packet from a specified port) written in the instruction field of the entry. If the OpenFlow switch does not find an entry matching the incoming packet as a result of the search, the OpenFlow switch requests the OpenFlow controller to set an entry via the secure channel. Namely, the OpenFlow switch requests the OpenFlow controller to determine the processing content of the incoming packet ("Packet-In" in Fig. 17). The OpenFlow switch receives a flow entry corresponding to the request and updates the flow table ("FlowMod" in Fig. 17). Thus, by using an entry stored in the flow table as a processing rule, the OpenFlow switch executes packet forwarding.

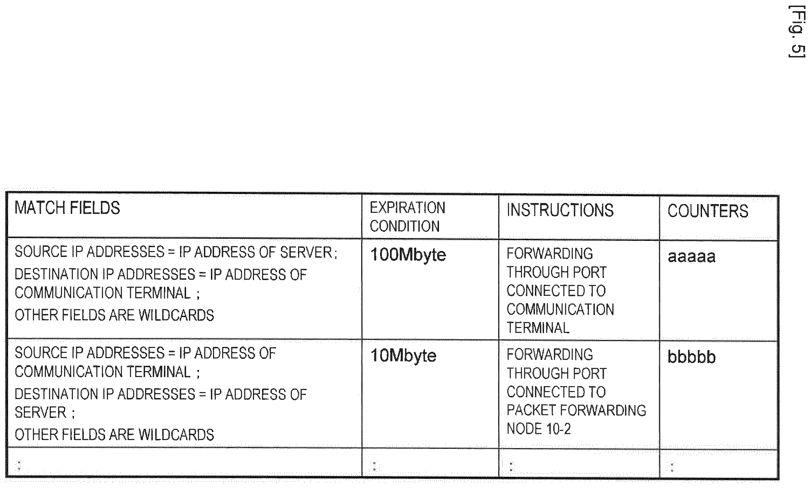

The following analyses are given by the present invention. The OpenFlow switch in "OpenFlow: Enabling Innovation in Campus Networks" and "OpenFlow Switch Specification" has a function of deleting a flow entry if a certain period of time elapses after the flow entry is set or if no relevant packets are supplied for a certain period of time. This deletion is executed based on a hard timeout value and an idle timeout value set for each flow (see "timeout" in Fig. 17 and 5.7 FLOW Removal in the "OpenFlow Switch Specification").

While the "OpenFlow: Enabling Innovation in Campus Networks" and the "OpenFlow Switch Specification" disclose deletion of a flow entry based on a timer, if a flow entry is deleted only based on a timer, flexibility of flow control is insufficient, counted as a problem.

Andrew R Curtis et al.: "DevoFlow: Scaling Flow Management for High-Performance Networks", SIGCOMM '11, pages 254 to 265, XP058006656, DOI: 10.1145/2018436.2018466, ISBN: 978-1-4503-0797-0, dated 15 August 2011, provides an analysis of the overheads in OpenFlow's design and a modification of the OpenFlow model which removes the coupling between control and global visibility.

Thus there is a need to realize more flexible flow control.

### SUMMARY OF THE INVENTION

According to a first aspect of the present disclosure, there is provided a communication apparatus according to independent claim 1. Optionally, the packet processing unit may determine whether to refer to the first table by comparing the statistical value with the predetermined condition.

Optionally, the predetermined condition may be a predetermined threshold, and the packet processing unit may refer to the first table and processes a packet until the statistical value exceeds the threshold.

Optionally, the second table may store a plurality of processing rules for determining whether to refer to the first table based on the predetermined condition, and each of the plurality of processing rules may correspond to a packet source.

Optionally, the statistical value measurement unit may measure a statistical value compared with the predetermined condition per source.

Optionally, the statistical value measurement unit may measure a statistical value corresponding to packet processing executed based on a processing rule stored in the first table.

Optionally, the statistical value measurement unit may measure a statistical value corresponding to time that elapses after a processing rule has been set in the first table.

According to a second aspect of the present disclosure, there is provided a communication system according to independent claim 8. According to a third aspect of the present disclosure, there is provided a communication control method according to independent claim 9. According to a fourth aspect of the present disclosure, there is provided a program according to independent claim 10. This program can be recorded in a computer-readable storage medium which is non-transitory. That is, the present disclosure may be embodied as a computer program product.

According to the present disclosure, instead of causing a control apparatus to grasp and analyze a communication amount per processing rule of a communication apparatus, the communication apparatus executes a detailed control operation based on the communication amount.

### BRIEF DESCRIPTION OF THE DRAWINGS

Fig. 1 illustrates a configuration example of a communication system according to an exemplary embodiment.
Fig. 2 illustrates a configuration example of a processing rule stored in a packet forwarding node according to an exemplary embodiment.
Fig. 3 illustrates a configuration example of a communication system according to a first exemplary embodiment.
Fig. 4 is a block diagram illustrating a configuration example of a packet forwarding node according to the first exemplary embodiment.
Fig. 5 illustrates configuration examples of processing rules stored in a packet forwarding node according to the first exemplary embodiment.
Fig. 6 is a block diagram illustrating a configuration example of a control apparatus according to the first exemplary embodiment.
Fig. 7 is a sequence diagram illustrating an operation example of the communication system according to the first exemplary embodiment of the present invention.
Fig. 8 illustrates a configuration example of a communication system according to a second exemplary embodiment.
Fig. 9 is a block diagram illustrating a configuration example of a communication terminal according to the second exemplary embodiment.
Fig. 10 illustrates configuration examples of processing rules stored in the communication terminal according to the second exemplary embodiment.
Fig. 11 is a sequence diagram illustrating an operation example of the communication system according to the second exemplary embodiment.
Fig. 12 is a block diagram illustrating a configuration example of a control apparatus according to a third exemplary embodiment.
Fig. 13 is a sequence diagram illustrating an operation example of a communication system according to a fourth exemplary embodiment.
Fig. 14 is a sequence diagram illustrating an operation example of a communication system according to the fourth exemplary embodiment.
Fig. 15 illustrates configuration examples of processing rules stored in a packet forwarding node according to a fifth exemplary embodiment.
Fig. 16 illustrates a configuration example of a flow entry stored in an OpenFlow switch in the OpenFlow Switch Specification.
Fig. 17 is a sequence diagram illustrating an operation example from flow entry setting to flow entry deletion by timeout in the OpenFlow Switch Specification.

### DETAILED DESCRIPTION OF EXAMPLE EMBODIMENTS

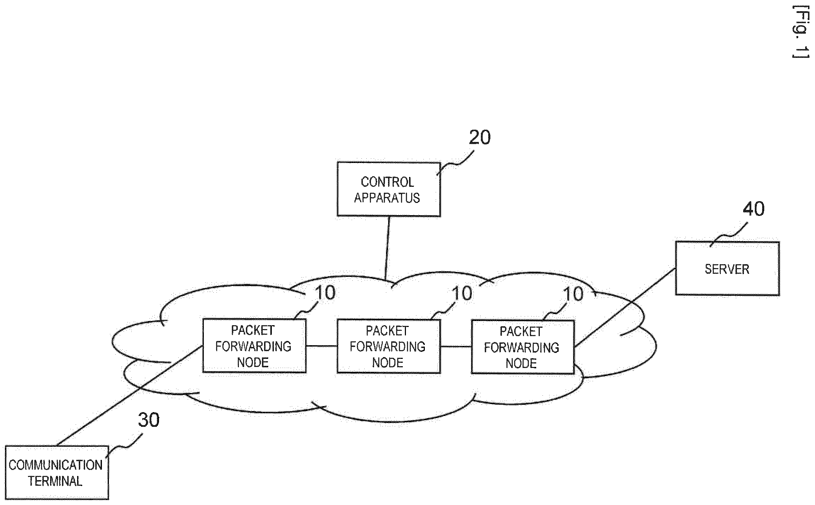

First, an outline of one exemplary embodiment will be described with reference to the drawings. As illustrated in Fig. 1, one exemplary embodiment can be realized by a configuration including a communication terminal 30, packet forwarding nodes 10 communicating with a server 40, and a control apparatus 20 controlling these packet forwarding nodes 10. In the following outline, the reference characters added to various elements are merely used as examples to facilitate understanding of the present disclosure. Namely, these reference characters are not intended to limit the present disclosure to the modes illustrated in the drawings. In addition, the above communication apparatus corresponds to a packet forwarding node.

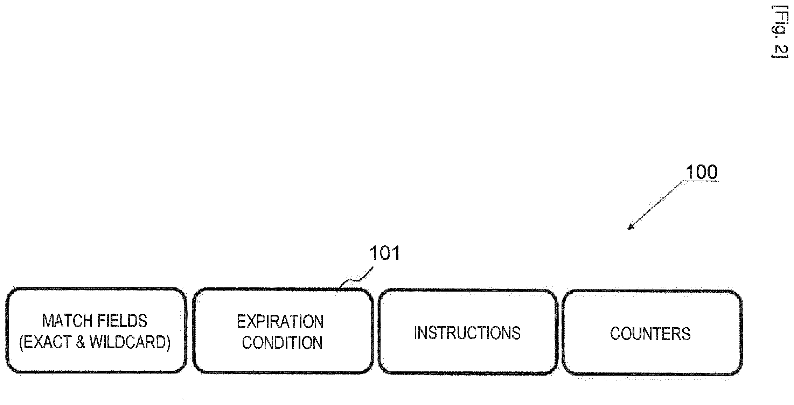

Fig. 2 illustrates a configuration example of a processing rule 100 stored in a packet forwarding node 10 in Fig. 1. The configuration in Fig. 2 is only an example, and therefore, the configuration of the processing rule is not limited to that illustrated in Fig. 2. The control apparatus 20 sets the processing rule 100 in a packet forwarding node 10. The difference from a flow entry stored in the OpenFlow switch in the OpenFlow Switch Specification illustrated in Fig. 16 is that, instead of a timeout value, an expiration condition 101 is set in the processing rule 100. The control apparatus 20 sets the processing rule 100 in a packet forwarding node 10. The packet forwarding node 10 refers to the match fields in the processing rules 100, to search for a processing rule 100 matching the incoming packet, and processes the packet in accordance with the instructions in the retrieved processing rule 100. The statistical information (counters) in the processing rule 100 is updated based on packet processing. If no processing rule 100 corresponding to the incoming packet exists, the packet forwarding node 10 requests the control apparatus 20 to set a processing rule.

For example, as the expiration (or invalidation) condition in the processing rule, a threshold indicating a statistical value processable based on the processing rule is set. Of course, as in the OpenFlow Switch Specification, a time-out value for determining whether a certain period of time has elapsed after a processing rule is set or whether no relevant packets have been supplied for a certain period of time may be set.

The packet forwarding node 10 includes: a packet processing unit processing a packet in accordance with a processing rule matching an incoming packet; and a statistical value measurement unit measuring a statistical value based on the processing rule statistical information (counter) updated based on packet processing. Namely, the statistical value measurement unit measures a statistical value corresponding to packet processing executed by a predetermined processing rule. For example, the statistical value is the number of packets or bytes processed in accordance with a predetermined processing rule. Namely, the statistical value is the amount of communication corresponding to packets processed in accordance with predetermined processing rules. The statistical value measurement unit may measure a statistical value for each processing rule.

Alternatively, the statistical value measurement unit may measure a statistical value that can be obtained based on each of the packet processing amounts by a plurality of processing rules. The statistical value measurement unit may measure a statistical value that can be obtained based on the packet processing amount by a processing rule matching a predetermined condition, among the plurality of processing rules stored in the packet forwarding node 10. By measuring a statistical value that can be obtained based on the packet processing amounts by the plurality of processing rules, the statistical value measurement unit can measure the amount of communication executed by the communication apparatus. For example, the packet processing unit may be realized by using a mechanism similar to that of the OpenFlow switch in "OpenFlow: Enabling Innovation in Campus Networks" and the "OpenFlow Switch Specification". In addition, the packet forwarding node 10 according to one exemplary embodiment deletes or invalidates a processing rule based on an expiration condition. The packet forwarding node 10 includes a processing rule management unit that voids (deletes or invalidates, for example) a relevant processing rule, for example, if a statistical value indicated in the statistical information (counters) exceeds a threshold set in the expiration condition in the relevant processing rule. The processing rule management unit compares a statistical value obtained based on the packet processing amounts by a plurality of processing rules with the expiration conditions in the processing rules. If a statistical value matches an expiration condition, the processing rule management unit voids (deletes or invalidates, for example) a processing rule corresponding to the expiration condition. Alternatively, if the statistical value matches an expiration condition, the processing rule management unit may rewrite the packet process defined in the processing rule corresponding to the expiration condition to a packet discarding process. Namely, the processing rule management unit determines whether each processing rule is valid or not based on a statistical value.

With this configuration, after communication between the communication terminal 30 and the server 40 is allowed in accordance with a processing rule, if a predetermined data amount is exceeded, the processing rule is deleted. As a result, the packet forwarding node 10 discards a subsequent packet addressed to the server 40 from the communication terminal 30 or forwards the subsequent packet to the control apparatus 20 and requests the control apparatus 20 to set a processing rule. Namely, by deleting a processing rule based on a data amount, the packet forwarding node 10 can block communication of subsequent packets transmitted from the communication terminal 30. Alternatively, the control apparatus 20 can set a processing rule so that subsequent packets from the communication terminal 30 are forwarded through a narrowband communication path. Thus, according to one exemplary embodiment, flexible flow control based on a communication amount can be executed.

The threshold set in the expiration condition field in each processing rule may be a predetermined value. Alternatively, when setting a processing rule, the control apparatus 20 may determine the threshold. In addition, the control apparatus 20 specifies the target packets whose communication amount is measured by using the match fields, the control apparatus 20 may delete or invalidate a processing rule based on the communication amount of the target packets.

While, in the above example, the packet forwarding node 10 deletes or invalidates a processing rule based on the communication amount, the communication terminal 30 may delete or invalidate a processing rule based on the communication amount. The same applies to the following exemplary embodiments described below. Examples of the communication terminal 30 include a mobile phone, a personal computer, a mobile router, and the like. One exemplary embodiment is applicable to a communication apparatus such as the packet forwarding node 10 or the communication terminal 30.

The communication terminal 30 stores the processing rule 100 set by the control apparatus 20 and processes a packet based on the processing rule 100. The communication terminal 30 stores the processing rule 100 including the expiration (or invalidation) condition 101 and deletes or invalidates a processing rule based on the expiration condition 101.

In the above configuration example, the expiration condition is included in the processing rule. However, the expiration condition may be set in the packet forwarding node, separately from the processing rule.

### First exemplary embodiment

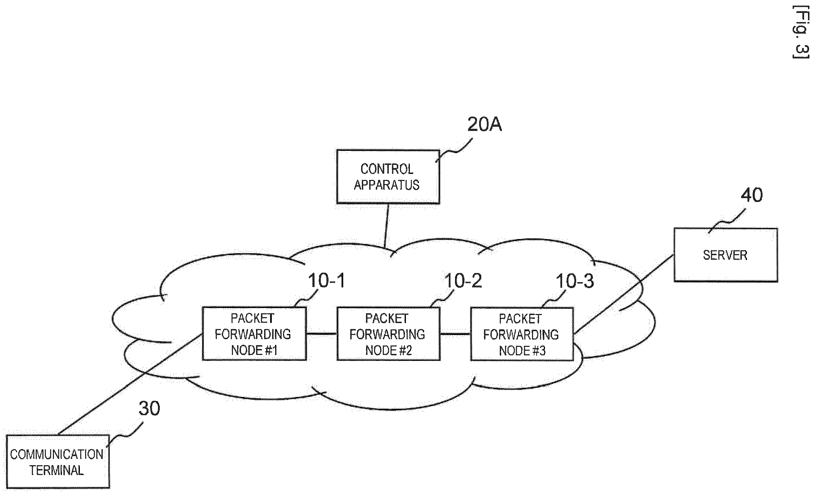

A first exemplary embodiment of the present disclosure will be described with reference to the drawings. Fig. 3 illustrates a configuration example of a communication system according to the first exemplary embodiment. In Fig. 3, the communication system includes a communication terminal 30, packet forwarding nodes 10-1 to 10-3 communicating with a server 40, and a control apparatus 20A controlling these packet forwarding nodes 10-1 to 10-3.

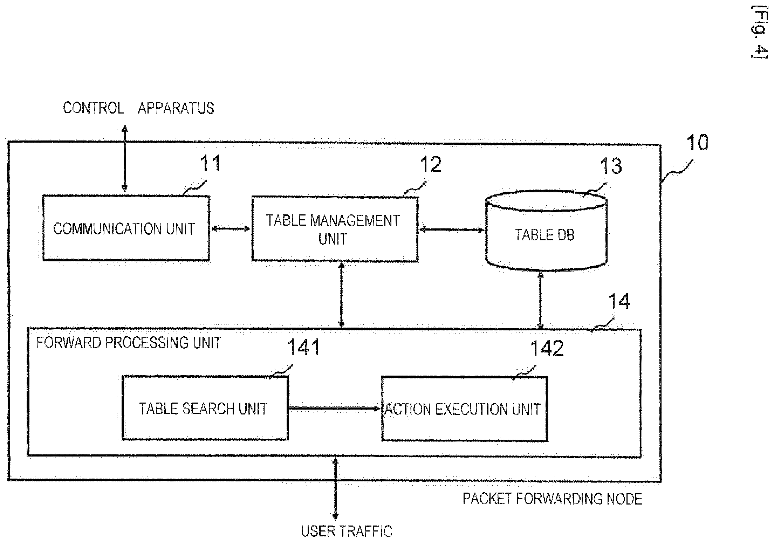

Fig. 4 is a block diagram illustrating a detailed configuration of the packet forwarding node 10 (hereinafter, the packet forwarding nodes 10-1 to 10-3 are described as "the packet forwarding node 10" when there is no need to particularly distinguish the packet forwarding nodes 10-1 to 10-3 from one another). In Fig. 4, the packet forwarding node 10 includes a communication unit 11, a table management unit 12, a table database (table DB) 13, and a forward processing unit 14.

The communication unit 11 is a means of realizing communication with the control apparatus 20A that sets a processing rule in the packet forwarding node 10. In the present exemplary embodiment, the communication unit 11 uses an OpenFlow protocol in the OpenFlow Switch Specification to communicate with the control apparatus 20A. However, the communication protocol used between the communication unit 11 and the control apparatus 20A is not limited to the OpenFlow protocol.

The table management unit 12 is a means of managing tables stored in the table database (table DB) 13. In the present exemplary embodiment, the table management unit 12 serves as the above processing rule management unit. More specifically, the table management unit 12 registers a processing rule specified by the control apparatus 20A in the table DB 13. In addition, when notified by the forward processing unit 14 of reception of a new packet, the table management unit 12 requests the control apparatus 20A to set a processing rule. The table management unit 12 refers to an expiration condition and statistical information (counters) in a processing rule stored in each table, and if the statistical value indicated in the statistical information (counters) exceeds a threshold set in the expiration condition in the processing rule, the table management unit 12 deletes or invalidates the processing rule. Alternatively, if the statistical value matches the expiration condition, the table management unit 12 may rewrite the packet process defined in the processing rule corresponding to the expiration condition to a packet discarding process. Further alternatively, if the statistical value matches the expiration condition, the table management unit 12 may execute traffic shaping on the packet process defined in the processing rule corresponding to the expiration condition. For example, the traffic shaping signifies control of the transfer rate of a packet flow corresponding to the processing rule in which the statistical value exceeds the threshold. For example, the control of the transfer rate signifies a process of delaying the packet flow or a process of controlling the transfer rate to remain below a predetermined value. However, the control of the transfer rate is not limited to such process of delaying the packet flow or controlling the transfer rate to remain below a predetermined value.

The table database (table DB) 13 is configured by a database capable of storing at least one table to which the forward processing unit 14 refers when processing an incoming packet.

The forward processing unit 14 includes: a table search unit 141 searching the table stored in the table DB 13 for a processing rule having a match field matching an incoming packet; and an action execution unit 142 executing a packet process in accordance with the processing contents indicated in the instruction field of the processing rule found by the table search unit 141. If the forward processing unit 14 does not find a processing rule having a match field matching the incoming packet, the forward processing unit 14 notifies the table management unit 12 of that effect. In addition, depending on the packet process, the forward processing unit 14 updates the statistical information (counters) registered in the table DB. The forward processing unit 14 may obtain a statistical value based on the statistical information (counters) corresponding to a plurality of processing rules. For example, the forward processing unit 14 may add the statistical information corresponding to a plurality of processing rules and calculate a statistical value, and the table management unit 12 may compare this statistical value with the expiration condition of each of the processing rules and determine whether each processing rule is valid. In addition, for example, among the processing rules stored in the table DB, the forward processing unit 14 may calculate a statistical value based on the statistical information corresponding to a processing rule corresponding to a predetermined condition. For example, the forward processing unit 14 may calculate a statistical value based on the statistical information corresponding to a processing rule for processing packets inputted through a predetermined port or to a processing rule for outputting packets to a predetermined port. Namely, in the present exemplary embodiment, the forward processing unit 14 serves as the above packet processing unit and statistical value measurement unit.

Fig. 5 illustrates a table that is set in the table DB 13 of the packet forwarding node 10-1. In Fig. 5, processing rules for realizing communication between the communication terminal 30 and the server 40 in Fig. 3 are set. For example, the IP addresses of the communication terminal 30 and the server 40 are set as the source and destination IP addresses, respectively, in header fields of a packet transmitted from the communication terminal 30 to the server 40. Thus, if the packet forwarding node 10-1 receives a packet addressed to the server 40 from the communication terminal 30, the table search unit 141 of the packet forwarding node 10-1 searches the table in Fig. 5 for the second top processing rule as a processing rule matching the incoming packet. Next, the action execution unit 142 of the packet forwarding node 10-1 forwards the incoming packet through a port connected to the packet forwarding node 10-2, in accordance with the content indicated in the instruction filed. If a processing rule corresponding to the incoming packet does not exist, the packet forwarding node 10-1 requests the control apparatus 20A to set a processing rule.

Similarly, for example, the IP addresses of the server 40 and the communication terminal 30 are set as the source and destination IP addresses, respectively, in header fields of a packet addressed to the communication terminal 30 from the server 40. Thus, if the packet forwarding node 10-1 receives a packet addressed to the communication terminal 30 from the server 40, the table search unit 141 of the packet forwarding node 10-1 searches the table in Fig. 5 for the top processing rule as a processing rule matching the incoming packet. Next, the action execution unit 142 of the packet forwarding node 10-1 forwards the incoming packet through a port connected to the communication terminal 30, in accordance with the content indicated in the instruction filed. If a processing rule corresponding to the incoming packet does not exist, the packet forwarding node 10-1 requests the control apparatus 20A to set a processing rule.

In Fig. 5, values (thresholds), that is, 100 M bytes and 10 M bytes, are set as the expiration conditions of the processing rules. In this case, if the statistical information (counters) in the top processing rule in Fig. 5 exceeds 100 M bytes, the table management unit 12 deletes this processing rule. The statistical information in the processing rule is updated based on the packet process executed by the processing rule.

In addition, if the statistical information (counters) in the second top processing rule in Fig. 5 exceeds 10 M bytes, the table management unit 12 deletes this processing rule. The statistical information in the processing rule is updated based on the packet process executed by the processing rule.

The table management unit 12 may obtain a statistical value based on the statistical information in the top and second top processing rules in the table illustrated in Fig. 5 and compare the statistical value with the expiration conditions of the processing rules. The statistical value can be obtained by adding the statistical information in the processing rules, for example. For example, if the obtained statistical value is 10 M bytes, the statistical value matches the expiration condition in the second top processing rule in the table illustrated in Fig. 5. In this case, the second top processing rule in the table is deleted.

In Fig. 5, byte is specified as the unit of the statistical value used as the threshold for deleting the processing rule. However, the number of packets may be used alternatively. In the statistical information (counters), if another unit such as bit is used to manage the statistical information, the another unit such as bit may be used.

Similarly, the processing rules as described above are set in the packet forwarding nodes 10-2 and 10-3.

The above packet forwarding node 10 can be realized by adding the above function of deleting a processing rule based on the statistical value to the OpenFlow switch in the OpenFlow Switch Specification.

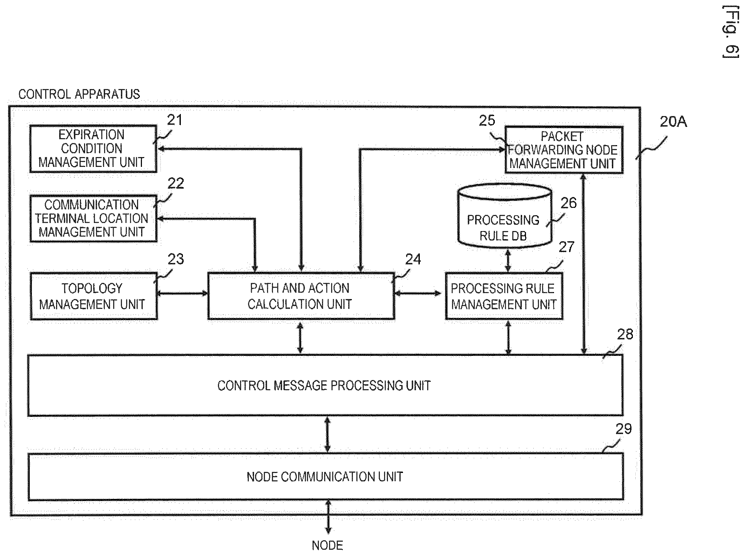

Fig. 6 is a block diagram illustrating a configuration example of the control apparatus 20A. In Fig. 6, the control apparatus 20A includes an expiration condition management unit 21, a communication terminal location management unit 22, a topology management unit 23, a path and action calculation unit 24, a packet forwarding node management unit 25, a processing rule database (processing rule DB) 26, a processing rule management unit 27, a control message processing unit 28, and a node communication unit 29 communicating with the packet forwarding node 10.

For example, the expiration condition management unit 21 manages the expiration condition including a statistical value upper limit (threshold), per processing rule or combination of a source and a destination, each of which is managed by a MAC address. If the expiration condition is managed per combination of a source and a destination, one of the source and the destination may be set as a wildcard, that is, as indefinite. Other than the above statistical value, a timeout value of an arbitrary type may be set as the expiration condition. For example, a timeout value (a hard timeout value, an idle timeout value) may be set other than the statistical value. In this way, even when the statistical value does not exceed a predetermined threshold, the processing rule can be deleted after a certain period of time elapses.

The communication terminal location management unit 22 manages information for determining the locations of the communication terminals connected to the communication system. For example, the location of a communication terminal can be managed by information for identifying the packet forwarding node 10 to which the communication terminal is connected and information about the port.

The topology management unit 23 establishes network topology information, based on a connection relationship among the packet forwarding nodes 10 collected via the node communication unit 29. If the topology information changes, the topology management unit 23 may notify the path and action calculation unit 24 of the change of the topology information and cause the path and action calculation unit 24 to reset an existing processing rule, for example.

The control message processing unit 28 analyzes a control message transmitted from the packet forwarding node 10 and transmits information about the control message to relevant processing means in the control apparatus 20A.

The path and action calculation unit 24 serves as a means of calculating a packet forwarding path based on the communication terminal location information managed by the communication terminal location management unit 22 and the topology information managed by the topology management unit 23. In addition, the path and action calculation unit 24 serves as a means of determining processing contents (actions) executed by the packet forwarding nodes 10, by referring to capability information about the packet forwarding nodes managed by the packet forwarding node management unit 25. In addition, the path and action calculation unit 24 serves as a means of referring to the expiration condition in each processing rule managed by the expiration condition management unit 21 and determining a value set in the expiration condition field in each processing rule.

The packet forwarding node management unit 25 manages capabilities of each of the managed packet forwarding nodes 10-1 to 10-3 (for example, the number of ports, the types of the ports, the types of the supported actions, etc.).

The processing rule management unit 27 manages the processing rules set in the packet forwarding node 10. More specifically, the processing rule management unit 27 stores results calculated by the path and action calculation unit 24 in the processing rule DB 26 as a processing rule. In addition, when a processing rule set in the packet forwarding node 10 is changed and when the processing rule management unit 27 receives a notification of deletion of the processing rule from the packet forwarding node 10, the processing rule management unit 27 updates the content of the processing rule DB 26.

For example, the control apparatus 20A as described above can be realized by adding the expiration condition management unit 21 to the OpenFlow controller unit in the OpenFlow Switch Specification and causing the path and action calculation unit 24 to generate a processing rule having an expiration condition.

The units (processing means) of the packet forwarding node 10 and the control apparatus 20A illustrated in Figs. 4 and 6 can be realized by using a computer program that causes a computer constituting the units to use hardware of the computer and to execute the above processes.

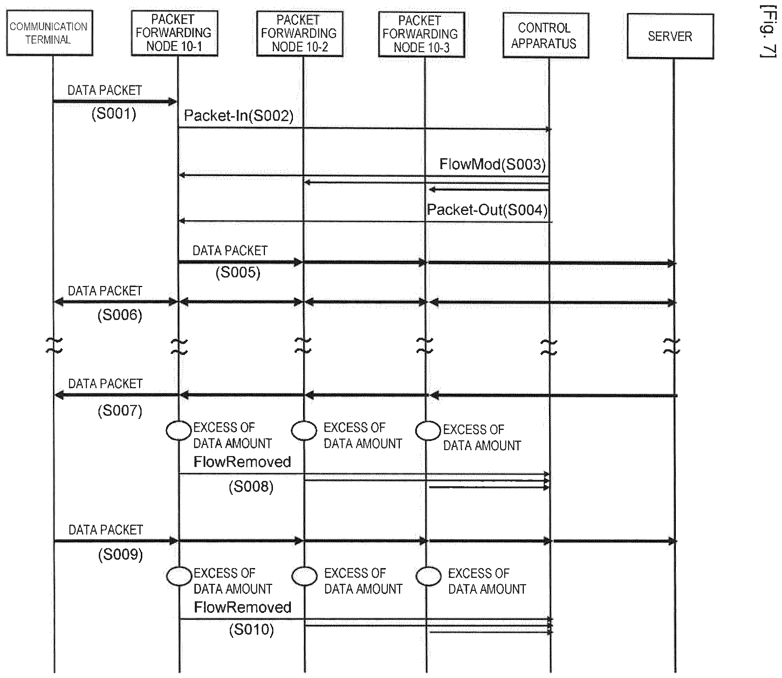

Next, an operation example of the present exemplary embodiment will be described with reference to the drawings. However, Fig. 7 will be used for illustrative purposes only. The operation of the present disclosure is not limited to the sequence in Fig. 7. Fig. 7 is a sequence diagram illustrating an operation of the communication system according to the first exemplary embodiment. The following description will be made assuming that no processing rule for realizing communication between the communication terminal 30 and the server 40 is set in the packet forwarding nodes 10-1 to 10-3 in an initial state.

In Fig. 7, first, the communication terminal 30 transmits a user packet addressed to the server 40 (S001 in Fig. 7). Next, the packet forwarding node 10-1 receives the user packet and searches the table therein for a processing rule having a match field matching the incoming packet. However, since such processing rule is not found, the packet forwarding node 10-1 transmits the incoming packet and a request to request the control apparatus 20A to set a processing rule (S002; Packet-In in Fig. 7).

After receiving the request to set a processing rule, the control apparatus 20A causes the path and action calculation unit 24 to create processing rules (in both directions) having the expiration conditions as illustrated in Fig. 5 and sets the processing rules in each packet forwarding node 10 (S003; FlowMod in Fig. 7). In addition, the control apparatus 20A returns the packet supplied in S002 to the packet forwarding node 10-1 and instructs the packet forwarding node 10-1 to forward the packet to the packet forwarding node 10-2 (S004; Packet-Out in Fig. 7).

After the packet forwarding node 10-1 forwards the packet to the packet forwarding node 10-2 in accordance with the instruction, the packet forwarding nodes 10-2 and 10-3 forward the packet to the server 40 in accordance with the processing rules set respectively (S005 in Fig. 7).

Next, the packet forwarding nodes 10-1 to 10-3 forward user packets between the communication terminal 30 and the server 40, in accordance with the processing rules set respectively (S006 and S007 in Fig. 7).

Next, when a statistical value indicated in the statistical information (counters) in a processing rule for processing a packet addressed to the communication terminal 30 from the server 40 exceeds a threshold set in the expiration condition in the processing rule, the packet forwarding nodes 10-1 to 10-3 delete the processing rule (the top processing rule in Fig. 5).

The packet forwarding nodes 10-1 to 10-3 notify the control apparatus 20A of deletion of the respective processing rules (S008; FlowRemoved in Fig. 7). The control apparatus 20A updates the processing rule DB 26, based on the notification.

Next, when the communication terminal 30 transmits a packet addressed to the server 40 (S009 in Fig. 7), if the statistical value indicated in the statistical information (counters) in the processing rule for processing the packet exceeds the threshold set in the expiration condition in the processing rule, the packet forwarding nodes 10-1 to 10-3 delete the respective processing rules (the second top processing rule in Fig. 5).

The packet forwarding nodes 10-1 to 10-3 notify the control apparatus 20A of deletion of the respective processing rules (S010; FlowRemoved in Fig. 7). The control apparatus 20A updates the processing rule DB 26, based on the notification.

After deletion of the processing rules, the control apparatus 20A may set a new processing rule for discarding subsequent packets corresponding to the deleted processing rule in the packet forwarding nodes 10-1 to 10-3. In this way, it is possible to limit the traffic of packets having a statistical value exceeding a predetermined threshold.

Alternatively, after deletion of the processing rules, the control apparatus 20A may set a new processing rule that defines a method for forwarding subsequent packets corresponding to the deleted processing rule in the packet forwarding nodes 10-1 to 10-3 and instruct a predetermined node of the packet forwarding nodes 10-1 to 10-3 to execute traffic shaping. For example, the traffic shaping signifies control of the transfer rate of a packet flow corresponding to a processing rule in which the statistical value exceeds a threshold. The control of transfer rate signifies a process of delaying the packet flow or a process of controlling the transfer rate to remain below a predetermined value, for example. However, the control of the transfer rate is not limited to such process of delaying the packet flow or controlling the transfer rate to remain below a predetermined value.

The control apparatus 20A may instruct a predetermined node to control not only the transfer rate of a packet flow corresponding to a processing rule in which the statistical value exceeds a threshold but also the transfer rate of another packet flow corresponding to the packet flow. For example, the packet flow corresponding to a processing rule in which the statistical value exceeds a threshold is a flow transmitted from the communication terminal 30 to the server 40, and the another packet flow corresponding to the packet flow is a flow transmitted from the server 40 to the communication terminal 30.

Thus, according to the present exemplary embodiment, flexible flow control based on a communication amount can be executed.

### Second exemplary embodiment

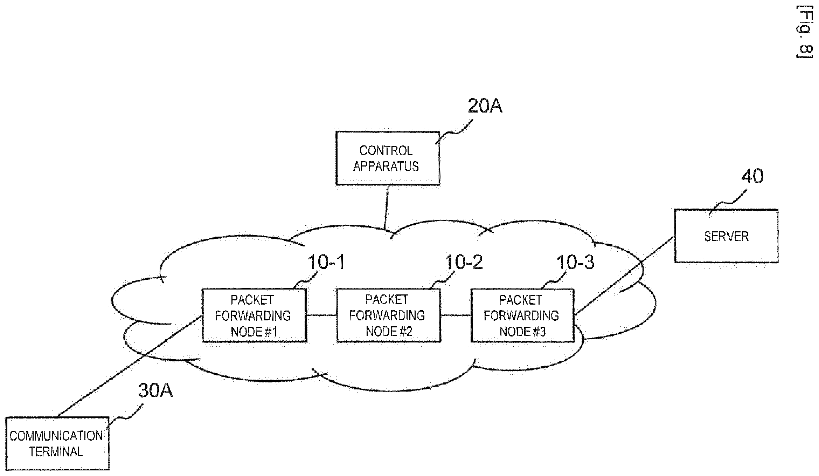

A second exemplary embodiment will be described with reference to the drawings. In the second exemplary embodiment, functions of a packet forwarding node are added to the communication terminal 30. The communication terminal 30 also corresponds to the above communication apparatus. For example, the communication terminal is a device having a communication function, such as a mobile phone, a personal computer, or a mobile router. Fig. 8 illustrates a configuration example of a communication system according to the second exemplary embodiment. The second exemplary embodiment is different from the first exemplary embodiment illustrated in Fig. 3 only in a communication terminal 30A. Since the second exemplary embodiment is the same as the first exemplary embodiment in the other aspects, the following description will be made with a focus on the difference.

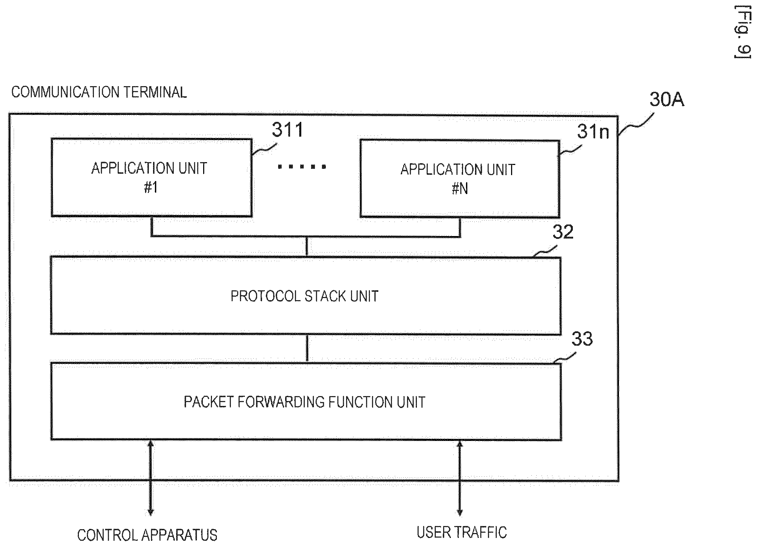

Fig. 9 is a block diagram illustrating a configuration example of the communication terminal 30A. In Fig. 9, the communication terminal 30A includes a plurality of application units 311 to 31 n, a protocol stack unit 32 providing these application units 311 to 31 n with an arbitrary protocol communication function, and a packet forwarding function unit 33 connected to the protocol stack unit 32 and executing packet processing equivalent to that of the packet forwarding node 10 in the above first exemplary embodiment.

As in the packet forwarding node 10 according to the first exemplary embodiment, the packet forwarding function unit 33 processes a packet based on a processing rule having an expiration condition set by the control apparatus 20A. More specifically, as in the packet forwarding node 10 according to the first exemplary embodiment, the packet forwarding function unit 33 includes the communication unit 11, the table management unit 12, the table DB 13, and the forward processing unit 14 and processes a packet outputted from the protocol stack unit 32 and the user traffic forwarded from the packet forwarding node 10-1. This packet forwarding function unit 33 can be realized by a computer program that executes the above packet processing, by using hardware (memory, communication means) of a computer constituting the communication terminal 30A. This computer program may be pre-installed in the communication terminal 30A. Alternatively, the computer program may be downloaded from an application server (not illustrated) or the like and the computer program may be installed in the communication terminal 30A. In addition, a threshold set in an expiration condition in each processing rule may be changed depending on the fee paid at the time of the download or a fee included in the fee of the computer program.

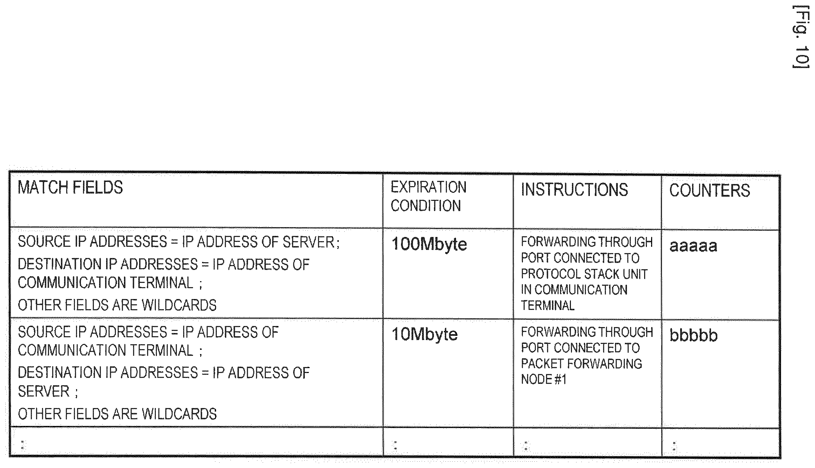

Fig. 10 is a specific example of a table that is set in the table DB in the packet forwarding function unit 33. In Fig. 10, processing rules for realizing communication between the protocol stack unit 32 in the communication terminal 30A in Fig. 9 and the server 40 are set. For example, the IP addresses of the communication terminal 30A and the server 40 are set as the source and destination IP addresses in header fields of a packet addressed to the server 40 from the protocol stack unit 32 in the communication terminal 30A. Thus, when the packet forwarding function unit 33 receives a packet addressed to the server 40 from the protocol stack unit 32 in the communication terminal 30A, the table search unit in the packet forwarding function unit 33 searches the table in Fig. 10 for the second top processing rule as a processing rule matching the incoming packet. Next, the action execution unit 142 in the packet forwarding function unit 33 forwards the incoming packet through a port connected to the packet forwarding node 10-1, in accordance with the content indicated in the instruction field. If a processing rule corresponding to the incoming packet does not exist, the communication terminal 30A requests the control apparatus to set a processing rule.

Similarly, for example, the IP addresses of the server 40 and the communication terminal 30A are set as the source and destination IP addresses in header fields of a packet addressed to the communication terminal 30A from the server 40. Thus, if the packet forwarding function unit 33 receives a packet addressed to the communication terminal 30A from the server 40, the table search unit in the packet forwarding function unit 33 searches the table in Fig. 10 for the top processing rule as a processing rule matching the incoming packet. Next, the action execution unit 142 in the packet forwarding function unit 33 forwards the incoming packet through a port connected to the protocol stack unit 32 of the communication terminal 30A in accordance with the content indicated in the instruction field. If a processing rule corresponding to the incoming packet does not exist, the communication terminal 30A requests the control apparatus to set a processing rule.

In Fig. 10, as in the first exemplary embodiment, values (thresholds), that is, 100 M bytes and 10 M bytes, are set as the expiration conditions in the processing rules. In this case, if the statistical information (counters) in the top processing rule in Fig. 10 exceeds 100 M bytes, the table management unit 12 in the packet forwarding function unit 33 deletes this processing rule. If the statistical information (counters) in the second top processing rule in Fig. 10 exceeds 10 M bytes, the table management unit 12 in the packet forwarding function unit 33 deletes the processing rule.

The packet forwarding function unit 33 may obtain a statistical value based on the statistical information (counters) in the top and second top processing rules in the table illustrated in Fig. 10 and compare the statistical value with the expiration conditions of the processing rules. The statistical value can be obtained by adding the statistical information in the processing rules, for example. For example, if the obtained statistical value is 10 M bytes, the statistical value matches the expiration condition in the second top processing rule in the table illustrated in Fig. 10. In this case, the second top processing rule in the table is deleted.

In addition, for example, among the processing rules stored in the table DB, the packet forwarding function unit 33 calculates a statistical value based on the statistical information corresponding to a processing rule corresponding to a predetermined condition. For example, the forward processing unit 14 calculates a statistical value based on a processing rule for processing packets inputted through a predetermined port or based on the statistical information (counters) corresponding to a processing rule for outputting packets to a predetermined port. If the communication terminal 30 includes a plurality of communication ports (for example, a 3G communication port, a WiFi communication port, a WiMAX communication port, etc.), the forward processing unit 14 calculates a statistical value based on the statistical information (counters) corresponding to a processing rule for receiving and transmitting packets via a predetermined one (for example, the 3G communication port) of the communication ports.

The processing rule as described above can be set similarly in the packet forwarding nodes 10-1 to 10-3.

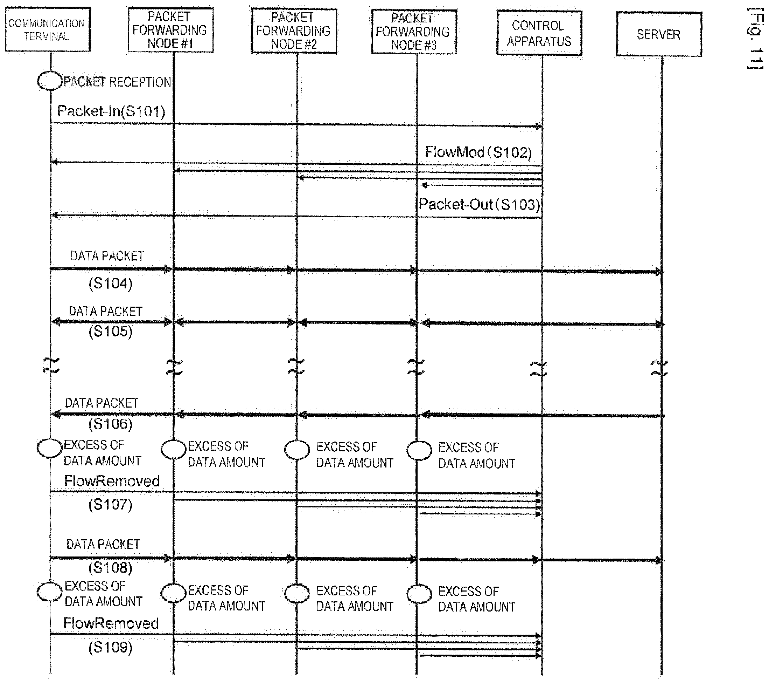

Next, an operation according to the present exemplary embodiment will be described in detail with reference to the drawings. Fig. 11 is a sequence diagram illustrating an operation of the communication system according to the second exemplary embodiment. The following description will be made assuming that no processing rule for realizing communication between the communication terminal 30A and the server 40 is set in the packet forwarding function unit 33 of the communication terminal 30A and the packet forwarding nodes 10-1 to 10-3 in an initial state.

In Fig. 11, first, when the packet forwarding function unit 33 of the communication terminal 30A receives a user packet addressed to the server 40 from the protocol stack unit 32, the packet forwarding function unit 33 searches the table therein for a processing rule having a match field matching the incoming packet. However, since such processing rule is not found, the communication terminal 30A transmits the incoming packet and a request to request the control apparatus 20A to set a processing rule (S101; Packet-In in Fig. 11). After receiving the request to set a processing rule, the control apparatus 20A causes the path and action calculation unit 24 to create processing rules (in both directions) having the expiration conditions as illustrated in Fig. 10 and sets the processing rules in the packet forwarding function unit 33 of the communication terminal 30A and each packet forwarding node 10 (S102; FlowMod in Fig. 11). In addition, the control apparatus 20A returns the packet supplied in S002 to the packet forwarding function unit 33 of the communication terminal 30A and instructs the communication terminal 30A to forward the packet to the packet forwarding node 10-1 (S103; Packet-Out in Fig. 11).

After the packet forwarding function unit 33 of the communication terminal 30A forwards the packet to the packet forwarding node 10-1 in accordance with the instruction, the packet forwarding nodes 10-1 and 10-3 forward the packet to the server 40 in accordance with the processing rules set respectively (S104 in Fig. 11).

Next, the packet forwarding function unit 33 of the communication terminal 30A and the packet forwarding nodes 10-1 to 10-3 forward user packets between the communication terminal 30A and the server 40, in accordance with the processing rules set respectively (S105 and S106 in Fig. 11).

Next, when a statistical value indicated in the statistical information (counters) in a processing rule for processing a packet addressed to the communication terminal 30A from the server 40 exceeds a threshold set in the expiration condition in the processing rule, the packet forwarding function unit 33 of the communication terminal 30A and the packet forwarding nodes 10-1 to 10-3 delete the respective processing rules (the top processing rule in Fig. 10).

The packet forwarding function unit 33 of the communication terminal 30A and the packet forwarding nodes 10-1 to 10-3 notify the control apparatus 20A of deletion of the respective processing rules (S107; FlowRemoved in Fig. 11). The control apparatus 20A updates the processing rule DB 26, based on the notification.

Next, when the communication terminal 30 transmits a packet addressed to the server 40 (S108 in Fig. 11), if a statistical value indicated in the statistical information (counters) in a processing rule for processing the packet exceeds a threshold set in the expiration condition in the processing rule, the packet forwarding function unit 33 of the communication terminal 30A and the packet forwarding nodes 10-1 to 10-3 delete the respective processing rules (the second top processing rule in Fig. 5).

The packet forwarding function unit 33 of the communication terminal 30A and the packet forwarding nodes 10-1 to 10-3 notify the control apparatus 20A of deletion of the respective processing rules (S109; FlowRemoved in Fig. 11). The control apparatus 20A updates the processing rule DB 26, based on the notification.

After deletion of the processing rules, the control apparatus 20A may set a new processing rule for discarding subsequent packets corresponding to the deleted processing rule in the packet forwarding function unit 33 of the communication terminal 30A and the packet forwarding nodes 10-1 to 10-3. In this way, the traffic of packets having a statistical value exceeding a predetermined threshold can be limited.

Alternatively, after deletion of the processing rules, the control apparatus 20A may set a new processing rule that defines a method for forwarding subsequent packets corresponding to the deleted processing rule in the packet forwarding function unit 33 and the packet forwarding nodes 10-1 to 10-3 and instruct a predetermined node of the packet forwarding function unit 33 and the packet forwarding nodes 10-1 to 10-3 to execute traffic shaping. For example, the traffic shaping signifies control of the transfer rate of a packet flow corresponding to a processing rule in which the statistical value exceeds a threshold. The control of transfer rate signifies a process of delaying the packet flow or a process of controlling the transfer rate to remain below a predetermined value, for example. However, the control of the transfer rate is not limited to such process of delaying the packet flow or controlling the transfer rate to remain below a predetermined value.

The control apparatus 20A may instruct a predetermined node to control not only the transfer rate of a packet flow corresponding to a processing rule in which the statistical value exceeds a threshold but also the transfer rate of another packet flow corresponding to the packet flow. For example, the packet flow corresponding to a processing rule in which the statistical value exceeds a threshold is a flow transmitted from the communication terminal 30A to the server 40, and the another packet flow corresponding to the packet flow is a flow transmitted from the server 40 to the communication terminal 30A.

As described above, the present disclosure can be realized by including the packet forwarding function unit 33 in the communication terminal. In addition, compared with the above first exemplary embodiment, since the communication terminal according to the present exemplary embodiment can execute flow control such as packet discarding, the traffic flowing through the packet forwarding node 10 can be reduced. Thus, load on the packet forwarding node 10 and the control apparatus 20A can be reduced, counted as a meritorious effect. In addition, while an expiration condition is included in a processing rule in this configuration example, the expiration condition may be set in the communication terminal separately from the processing rule.

### Third exemplary embodiment

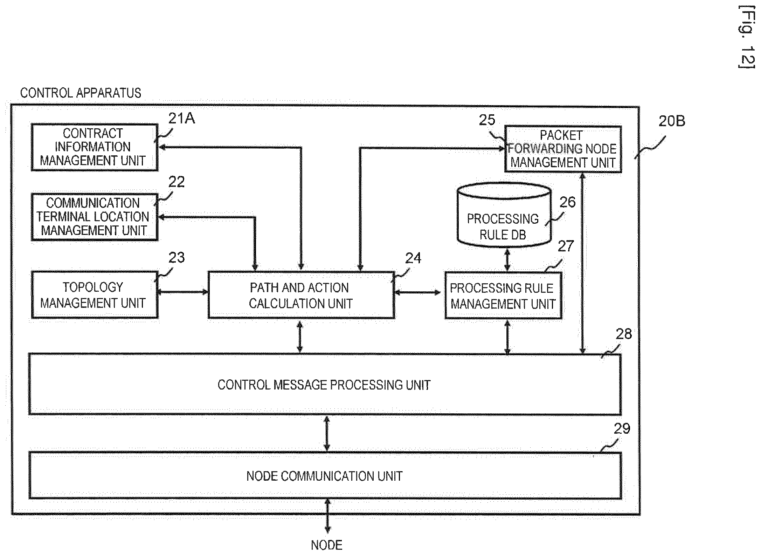

Next, a third exemplary embodiment according to the present invention will be described with reference to the drawings. In the third exemplary embodiment, the configuration of the control apparatus is modified. Fig. 12 illustrates a control apparatus 20B according to the third exemplary embodiment of the present invention. The control apparatus 20B is different from the control apparatus according to the first and second exemplary embodiments in that the expiration condition management unit 21 is replaced by a contract information management unit 21A. Since the third exemplary embodiment is the same as the first and second exemplary embodiments in the other aspects, the following description will be made with a focus on the difference.

The contract information management unit 21A according to the present exemplary embodiment manages user contract information about the communication terminal 30. More specifically, the contract information management unit 21A refers to the contract information in response to a request from the path and action calculation unit 24 and generates an expiration condition. The contract information management unit 21A may supply the contract information to the path and action calculation unit 24, and the path and action calculation unit 24 may use the contract information for path calculation. For example, if the user of the communication terminal 30 has a contract that allows communication with the server 40 up to 10 M bytes, the contract information management unit 21A requests the path and action calculation unit 24 to generate a processing rule in which 10 M bytes are set as an expiration condition. In this case, the contract information management unit 21A may request the path and action calculation unit 24 to generate a plurality of processing rules each including 10 M bytes set as an expiration condition.

If, without deletion of a processing rule due to the expiration condition, communication is terminated by a timeout or a communication termination notification or a log-out operation by the communication terminal 30, the control apparatus 20A may collect the statistical information (counters) in a relevant processing rule and cause the contract information management unit 21A to record a remaining statistical value that allows the user of the communication terminal 30 to execute communication.

Since an operation according to the present exemplary embodiment is the same as that according to the first and second exemplary embodiments, description thereof will be omitted.

As described above, according to the present exemplary embodiment, the expiration condition can be set flexibly based on the contract information.

In addition, as described above, by including the cause (a statistical value exceeding a threshold, a timeout, etc.) of deletion of a processing rule in a processing rule deletion notification transmitted from the packet forwarding node 10, the contract information management unit 21A of the control apparatus 20A can use this information to determine whether to update the contract information, for example.

### Fourth exemplary embodiment

Next, a fourth exemplary embodiment will be described. According to the fourth exemplary embodiment, if a statistical value exceeds a threshold defined in an expiration condition, the communication terminal 30 can communicate with an accounting server 50 and set a new threshold. For example, after a statistical value set in the original contract is exceeded, the user of the communication terminal 30 renews the contract information by paying an additional fee. By renewing the contract information, a new threshold is set in the expiration condition. By setting a new threshold and resetting the statistical value, the communication terminal 30 can continue data communication.

Since the packet forwarding node 10 and the communication terminal 30 are the same as those according to any one of the first to third exemplary embodiments, detailed description thereof will be omitted. In addition, since the control apparatus has a configuration similar to that of the control apparatus 20B according to the third exemplary embodiment, detailed description thereof will be omitted.

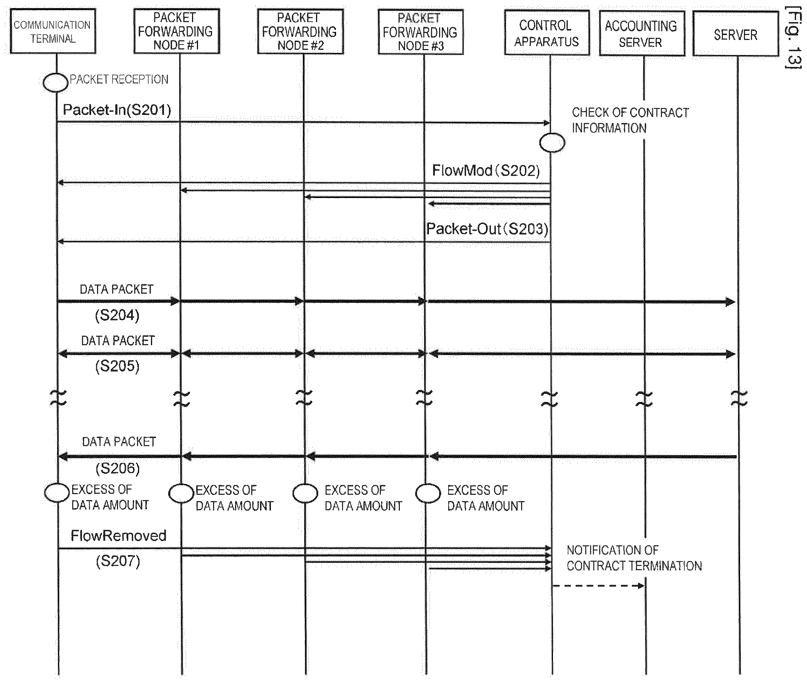

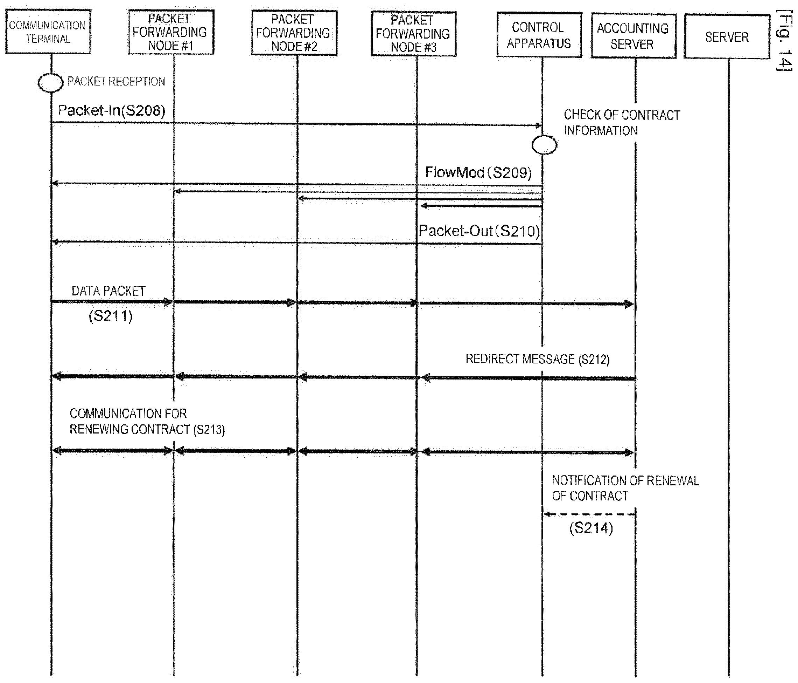

An operation according to the fourth exemplary embodiment will be described with reference to Figs. 13 and 14. If the packet forwarding function unit 33 of the communication terminal 30 receives a user packet addressed to the server 40 from the protocol stack unit 32, the packet forwarding function unit 33 searches a table therein for a processing rule having a match field matching the incoming packet. However, since such processing rule is not found, the communication terminal 30 transmits the incoming packet and a request to request the control apparatus 20B to set a processing rule (S201; Packet-In in Fig. 13).

After receiving the request for setting a processing rule, the control apparatus 20B causes the path and action calculation unit 24 to generate processing rules (both directions) having the expiration conditions as illustrated in Fig. 10 and set the processing rules in the packet forwarding function unit 33 and each packet forwarding node 10 (S202; FlowMod in Fig. 13). In addition, the control apparatus 20B returns the packet supplied in S201 to the communication terminal 30 and instructs the packet forwarding function unit 33 to forward the packet to the packet forwarding node 10-1 (S203; Packet-Out in Fig. 13).

After the packet forwarding function unit 33 forwards the packet to the packet forwarding node 10-1 in accordance with the instruction, the packet forwarding nodes 10-1 to 10-3 forward the packet to the server 40 in accordance with the processing rules set respectively (S204 in Fig. 13).

Next, the packet forwarding function unit 33 and the packet forwarding nodes 10-1 to 10-3 forward user packets between the communication terminal 30 and the server 40, in accordance with the processing rules set respectively (S205 and S206 in Fig. 13).

Next, when a statistical value indicated in the statistical information (counters) in a processing rule for processing a packet addressed to the communication terminal 30 from the server 40 exceeds a threshold set in the expiration condition in the processing rule, the packet forwarding function unit 33 and the packet forwarding nodes 10-1 to 10-3 delete the respective processing rules (for example, the top processing rule in Fig. 10).

The packet forwarding function unit 33 and the packet forwarding nodes 10-1 to 10-3 notify the control apparatus 20B of deletion of the respective processing rules (S207; FlowRemoved in Fig. 13). The control apparatus 20B updates the processing rule DB 26, based on the notification.

As described in the third exemplary embodiment, the thresholds set in the expiration conditions such as those in Fig. 10 are set based on the contract information regarding the user of the communication terminal 30, for example. Thus, if the amount of communication executed by the communication terminal 30 exceeds a threshold defined in the expiration condition, the control apparatus 20B may notify the accounting server 50 of the communication amount of the communication terminal 30 exceeding the contract communication amount (notification of contract termination in Fig. 13).

An operation subsequent to Fig. 13 will be described with reference to Fig. 14. After a statistical value exceeds a threshold and the processing rules are deleted in S207 in Fig. 13, when the packet forwarding function unit 33 of the communication terminal 30 receives a user packet addressed to the server 40 from the protocol stack unit 32, the packet forwarding function unit 33 searches the table therein for a processing rule having a match field matching the incoming packet. However, since such processing rule has already been deleted, the communication terminal 30 transmits the incoming packet and a request for requesting the control apparatus 20B to set a processing rule (S208; Packet-In in Fig. 14).

Since the communication amount of the communication terminal 30 has exceeded the contract communication amount (check of contract information in Fig. 14), the control apparatus 20B sets a processing rule (a redirect processing rule) defining that a packet addressed to the server 40 from the communication terminal 30 is forwarded to the accounting server 50 in each of the packet forwarding function unit 33 of the communication terminal 30 and the packet forwarding nodes 10-1 to 10-3 (S209 in Fig. 14).

If the accounting server 50 receives a packet forwarded from the communication terminal 30 in accordance with the redirect processing rule, the accounting server 50 transmits a redirect message to the communication terminal 30 (S210 in Fig. 14). After receiving the redirect message, the communication terminal 30 changes the communication session with the server 40 to a communication session with the accounting server 50.

Next, the communication terminal 30 communicates with the accounting server 50 (S213 in Fig. 14) and renews the contract information. In this way, a new threshold is set in the expiration condition. For example, by communicating with the accounting server 50 and executing a process of paying an additional fee, the user of the communication terminal 30 renews the contract information.

After the contract information is renewed, the accounting server 50 notifies the control apparatus 20B of completion of the renewal of the contract information (S214 in Fig. 14). The control apparatus 20B updates the contract information about the communication terminal 30 stored in the contract information management unit 21A and updates the threshold of the expiration condition set in the processing rule.

Based on the above operation, when the data communication amount of the communication terminal 30 exceeds a contract allowable amount, the communication terminal 30 can be requested to pay an additional fee, for example.

### Fifth exemplary embodiment

Next, a fifth exemplary embodiment will be described with reference to the drawings. The fifth exemplary embodiment is different from the above first to fourth exemplary embodiments in tables. In the fifth exemplary embodiment, a first table storing processing rules for processing packets and a second table managing a predetermined condition for referring to the first table are used. Since the fifth exemplary embodiment is the same as the first to fourth exemplary embodiments in the other aspects, the following description will be made with a focus on the difference.

The packet forwarding function unit 33 of the communication terminal 30A and the forward processing unit 14 of the packet forwarding node 10 determine whether to refer to the first table storing processing rules for processing packets, based on the predetermined condition managed in the second table. For example, the predetermined condition is determined based on a communication amount or time that elapses after a processing rule has been set in the first table. However, the predetermined condition is not limited to the communication amount or the elapsed time.

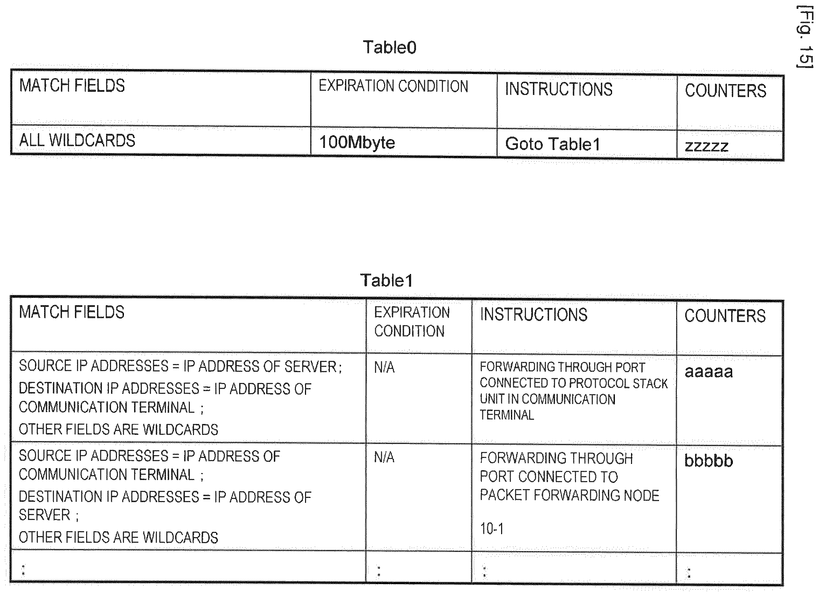

Fig. 15 illustrates tables set in the packet forwarding function unit 33 included in the communication terminal 30A as illustrated in Fig. 8. The upper table (Table0) in Fig. 15 manages a packet processing amount corresponding to predetermined processing rules stored in the lower table (Table1), as a predetermined condition (for example, as the expiration condition in Table0). In Fig. 15, a processing amount "100 M bytes" is defined as the expiration condition, which is an example of the predetermined condition. For example, the packet forwarding function unit 33 measures the packet processing amounts caused by a processing rule (the first entry in Table1) corresponding to a packet flow transmitted from the server 40 to the communication terminal 30A and by a processing rule (the second entry in Table1) corresponding to a packet flow transmitted from the communication terminal 30A to the server 40, as a statistical value (counters in Table0). The processing rules managed by such statistical value can be selected arbitrarily. Selection of the processing rules is not limited to the above method based on the packet flow source and destination.

In Fig. 15, a processing rule defining a processing content (Goto Table1) is set in a table (Table0), and this processing rule allows the process in the lower table (Table1) in Fig. 15 to be executed until the statistical value exceeds 100 M bytes.

As the predetermined condition, time that has elapsed after a predetermined processing rule is set in the lower table (Table1) may be set as the statistical value in the upper table (Table0) in Fig. 15.

In Fig. 15, only one entry is set in the upper table (Table0). However, a plurality of entries may be set in the upper table (Table0). For example, if the packet forwarding node 10 forwards packets transmitted from and addressed to a plurality of communication terminals 30A, the Table0 of the packet forwarding node 10 may hold a plurality of entries corresponding to the respective communication terminals 30A. In this case, each entry has an expiration condition, and a condition for a corresponding communication terminal 30A is set in each entry. In addition, each entry has a statistical value (counters), and a statistical value for a corresponding communication terminal 30A is stored in each entry. For example, the packet forwarding function unit 33 refers to the source address of a packet flow, determines a communication terminal 30A, and stores a statistical value in a corresponding entry in Table0.

On the other hand, for example, processing rules realizing communication between the protocol stack unit 32 of the communication terminal 30A and the server 40 are set in the lower table (Table1) in Fig. 15. However, no expiration condition is set in the lower table (Table1) in Fig. 15.

If a statistical value satisfies a predetermined condition (for example, a processing amount exceeds a predetermined threshold), the packet forwarding function unit 33 of the communication terminal 30A or the table management unit 12 of the packet forwarding node 10 executes a predetermined process on a processing rule stored in Table1. For example, the packet forwarding function unit 33 or the table management unit 12 deletes a processing rule in Table1 or rewrites a packet processing method defined in a processing rule to packet dropping.

According to the present exemplary embodiment including the above two tables, when an expiration condition is satisfied, it is only necessary to delete a processing rule from the upper flow control table in Fig. 15. Thus, there is no need to update the lower packet processing table in Fig. 15, counted as a meritorious effect. In this way, the communication terminal 30A, the packet forwarding node 10, and the control apparatus 20 can have less load to manage processing rules.

While exemplary embodiments of the present invention have thus been described, the present invention is not limited thereto. Further variations, substitutions, and adjustments are possible within the scope of the basic technical concept of the present invention. For example, the number of each type of the components, such as the packet forwarding nodes, the control apparatus, the communication terminal, and the server 40, illustrated in the above exemplary embodiments and the connection configuration of these components are used to facilitate the description of the present invention. Thus, such numbers or connection configuration can be changed as needed. While each of the exemplary embodiments refers to OpenFlow as a related technique, the present invention does not necessarily use OpenFlow. For example, other than OpenFlow, a communication architecture in which a control apparatus controls packet forwarding paths in a centralized manner is applicable to the present invention.

In addition, in the above exemplary embodiments, after a packet is forwarded by using a processing rule, whether to delete the processing rule is determined by using an expiration condition in the processing rule. However, a table management unit may determine whether to delete the processing rule at predetermined time intervals.

In addition, in the above exemplary embodiments, a processing rule is deleted by using an expiration condition of the processing rule. However, the processing content of the processing rule may be rewritten to packet drop or the like. Variations and adjustments of the exemplary embodiments are possible within the scope of the invention which is defined by the claims. Various combinations and selections of various disclosed elements are possible within the scope of the claims of the present invention. That is, the present invention which is defined by the claims includes various variations and modifications that could be made by those skilled in the art.

### REFERENCE SIGNS LIST

- 10, 10-1 to 10-3: packet forwarding node
- 11: communication unit
- 12: table management unit
- 13: table database (table DB)
- 14: forward processing unit
- 20, 20A, 20B: control apparatus
- 21: expiration (invalidation) condition management unit
- 21A: contract information management unit
- 22: communication terminal location management unit
- 23: topology management unit
- 24: path and action calculation unit
- 25: packet forwarding node management unit
- 26: processing rule database (processing rule DB)
- 27: processing rule management unit
- 28: control message processing unit
- 29: node communication unit
- 30, 30A: communication terminal
- 32: protocol stack unit
- 33: packet forwarding function unit
- 40: server
- 50: accounting server
- 100: processing rule
- 101: expiration (invalidation) condition
- 141: table search unit
- 142: action execution unit
- 311 to 31 n: application unit

## Claims

1. A communication apparatus (30, 30A), comprising:
a first table storing processing rules (100) transmitted from a control apparatus (20, 20A, 20B);
a packet processing unit (33) processing an incoming packet based on a processing rule (100) corresponding thereto among the processing rules (100) stored in the first table;
a second table managing a predetermined condition for referring to the first table; and
a statistical value measurement unit measuring a statistical value compared with the predetermined condition;
wherein the packet processing unit (33) determines whether to refer to the first table based on the predetermined condition; and
wherein the second table stores a processing rule (100) for determining whether to refer to the first table based on the statistical value.

2. The communication apparatus (30, 30A) according to claim 1;
wherein the packet processing unit (33) determines whether to refer to the first table by comparing the statistical value with the predetermined condition.

3. The communication apparatus (30, 30A) according to claim 1 or 2;
wherein the predetermined condition is a predetermined threshold, and the packet processing unit (33) refers to the first table and processes a packet until the statistical value exceeds the threshold.

4. The communication apparatus (30, 30A) according to any one of claims 1 to 3;
wherein the second table stores a plurality of processing rules (100) for determining whether to refer to the first table based on the predetermined condition, and each of the plurality of processing rules (100) corresponds to a packet source.

5. The communication apparatus (30, 30A) according to any one of claims 1 to 4;
wherein the statistical value measurement unit measures a statistical value compared with the predetermined condition per source.

6. The communication apparatus (30, 30A) according to any one of claims 1 to 5;
wherein the statistical value measurement unit measures a statistical value corresponding to packet processing executed based on a processing rule (100) stored in the first table.

7. The communication apparatus (30, 30A) according to any one of claims 1 to 6;
wherein the statistical value measurement unit measures a statistical value corresponding to time that elapses after a processing rule (100) has been set in the first table.

8. A communication system, comprising:
a control apparatus (20, 20A, 20B) generating a processing rule(s) (100) for a packet(s); and
a communication apparatus (30, 30A);
wherein the communication apparatus (30, 30A) comprises:
a first table storing processing rules (100) transmitted from the control apparatus (20, 20A, 20B);
a packet processing unit (33) processing an incoming packet based on a processing rule (100) corresponding thereto among the processing rules (100) stored in the first table;
a second table managing a predetermined condition for referring to the first table; and
a statistical value measurement unit measuring a statistical value compared with the predetermined condition
wherein the packet processing unit (33) determines whether to refer to the first table based on the predetermined condition; and
wherein the second table stores a processing rule (100) for determining whether to refer to the first table based on the statistical value.

9. A communication control method, comprising steps of:
storing processing rules (100) transmitted from a control apparatus (20, 20A, 20B) in a first table;
processing an incoming packet based on a processing rule (100) corresponding thereto among the processing rules stored in the first table;
causing a second table to manage a predetermined condition for referring to the first table;
measuring a statistical value compared with the predetermined condition;
determining whether to refer to the first table based on the predetermined condition; and
determining, on the basis of a processing rule (100) stored in the second table, whether to refer to the first table based on the statistical value.

10. A program, comprising instructions which, when the program is executed by a communication apparatus (33), cause the communication apparatus to carry out the steps of:
storing processing rules (100) transmitted from a control apparatus (20, 20A, 20B) in a first table;
processing an incoming packet based on a processing rule (100) corresponding thereto among the processing rules stored in the first table;
causing a second table to manage a predetermined condition for referring to the first table;
measuring a statistical value compared with the predetermined condition;
determining whether to refer to the first table based on the predetermined condition; and
determining, on the basis of a processing rule (100) stored in the second table, whether to refer to the first table based on the statistical value.

## Patentansprüche

1. Kommunikationsvorrichtung (30, 30A), die Folgendes umfasst:
eine erste Tabelle zum Speichern von von einer Steuervorrichtung (20, 20A, 20B) gesendeten Verarbeitungsregeln (100);
eine Paketverarbeitungseinheit (33) zum Verarbeiten eines eingehenden Pakets auf der Basis einer dementsprechenden Verarbeitungsregel (100) unter den in der ersten Tabelle gespeicherten Verarbeitungsregeln (100);
eine zweite Tabelle zum Verwalten einer vorbestimmten Bedingung zum Bezugnehmen auf die erste Tabelle; und
eine statistische Wertemesseinheit zum Messen eines statistischen Werts im Vergleich zu der vorbestimmten Bedingung;
wobei die Paketverarbeitungseinheit (33) bestimmt, ob auf die erste Tabelle Bezug genommen werden soll, auf der Basis der vorbestimmten Bedingung; und
wobei die zweite Tabelle eine Verarbeitungsregel (100) speichert, um zu bestimmen, ob auf die erste Tabelle Bezug genommen werden soll, auf der Basis des statistischen Wertes.

2. Kommunikationsvorrichtung (30, 30A) nach Anspruch 1,
wobei die Paketverarbeitungseinheit (33) durch Vergleichen des statistischen Wertes mit der vorbestimmten Bedingung bestimmt, ob auf die erste Tabelle Bezug genommen werden soll.

3. Kommunikationsvorrichtung (30, 30A) nach Anspruch 1 oder 2,
wobei die vorbestimmte Bedingung eine vorbestimmte Schwelle ist und die Paketverarbeitungseinheit (33) auf die erste Tabelle Bezug nimmt und ein Paket verarbeitet, bis der statistische Wert die Schwelle überschreitet.

4. Kommunikationsvorrichtung (30, 30A) nach einem der Ansprüche 1 bis 3,
wobei die zweite Tabelle mehrere Verarbeitungsregeln (100) speichert, um zu bestimmen, ob auf die erste Tabelle Bezug genommen werden soll, auf der Basis der vorbestimmten Bedingung, und jede der mehreren Verarbeitungsregeln (100) einer Paketquelle entspricht.

5. Kommunikationsvorrichtung (30, 30A) nach einem der Ansprüche 1 bis 4,
wobei die statistische Wertemesseinheit einen statistischen Wert im Vergleich zu der vorbestimmten Bedingung pro Quelle misst.

6. Kommunikationsvorrichtung (30, 30A) nach einem der Ansprüche 1 bis 5,
wobei die statistische Wertemesseinheit einen statistischen Wert entsprechend einer Paketverarbeitung misst, ausgeführt auf der Basis einer in der ersten Tabelle gespeicherten Verarbeitungsregel (100).

7. Kommunikationsvorrichtung (30, 30A) nach einem der Ansprüche 1 bis 6,
wobei die statistische Wertemesseinheit einen statistischen Wert entsprechend der Zeit misst, die nach dem Setzen einer Verarbeitungsregel (100) in der ersten Tabelle verstreicht.

8. Kommunikationssystem, das Folgendes umfasst:
eine Steuervorrichtung (20, 20A, 20B) zum Erzeugen von einer oder mehreren Verarbeitungsregeln (100) für ein oder mehrere Pakete; und
eine Kommunikationsvorrichtung (30, 30A);
wobei die Kommunikationsvorrichtung (30, 30A) Folgendes umfasst:
eine erste Tabelle zum Speichern von von der Steuervorrichtung (20, 20A, 20B) gesendeten Verarbeitungsregeln (100);
eine Paketverarbeitungseinheit (33) zum Verarbeiten eines eingehenden Pakets auf der Basis einer dementsprechenden Verarbeitungsregel (100) unter den in der ersten Tabelle gespeicherten Verarbeitungsregeln (100);
eine zweite Tabelle zum Verwalten einer vorbestimmten Bedingung zum Bezugnehmen auf die erste Tabelle; und
eine statistische Wertemesseinheit zum Messen eines statistischen Wertes im Vergleich zu der vorbestimmten Bedingung,
wobei die Paketverarbeitungseinheit (33) bestimmt, ob auf die erste Tabelle Bezug genommen werden soll, auf der Basis der vorbestimmten Bedingung; und
wobei die zweite Tabelle eine Verarbeitungsregel (100) speichert, um zu bestimmen, ob auf die erste Tabelle Bezug genommen werden soll, auf der Basis des statistischen Wertes.

9. Kommunikationssteuerverfahren, das die folgenden Schritte beinhaltet:
Speichern von von einer Steuervorrichtung (20, 20A, 20B) gesendeten Verarbeitungsregeln (100) in einer ersten Tabelle;
Verarbeiten eines eingehenden Pakets auf der Basis einer dementsprechenden Verarbeitungsregel (100) unter den in der ersten Tabelle gespeicherten Verarbeitungsregeln;
Bewirken, dass eine zweite Tabelle eine vorbestimmte Bedingung zum Bezugnehmen auf die erste Tabelle verwaltet;
Messen eines statistischen Wertes im Vergleich zu der vorbestimmten Bedingung;
Bestimmen, ob auf die erste Tabelle Bezug genommen werden soll, auf der Basis der vorbestimmten Bedingung; und
Bestimmen, auf der Basis einer in der zweiten Tabelle gespeicherten Verarbeitungsregel (100), ob auf die erste Tabelle Bezug genommen werden soll, auf der Basis des statistischen Wertes.

10. Programm, das Befehle umfasst, die bei Ausführung des Programms durch eine Kommunikationsvorrichtung (33) bewirken, dass die Kommunikationsbeleuchtung die folgenden Schritte ausführt:
Speichern von von einer Steuervorrichtung (20,20 A, 20 B) gesendeten Verarbeitungsregeln (100) in einer ersten Tabelle;
Verarbeiten eines eingehenden Pakets auf der Basis einer dementsprechenden Verarbeitungsregeln (100) unter den in der ersten Tabelle gespeicherten Verarbeitungsregeln;
Bewirken, dass eine zweite Tabelle eine vorbestimmte Bedingung zum Bezugnehmen auf die erste Tabelle verwaltet;
Messen eines statistischen Wertes im Vergleich zu der vorbestimmten Bedingung;
Bestimmen, ob auf die erste Tabelle Bezug genommen werden soll, auf der Basis der vorbestimmten Bedingung; und
Bestimmen, auf der Basis einer in der zweiten Tabelle gespeicherten Verarbeitungsregel (100), ob auf die erste Tabelle Bezug genommen werden soll, auf der Basis des statistischen Wertes.

## Revendications

1. Appareil de communication (30, 30A), comprenant :
une première table stockant des règles de traitement (100) transmises d'un appareil de commande (20, 20A, 20B) ;
une unité de traitement de paquets (33) traitant un paquet entrant sur la base d'une règle de traitement (100) correspondant à celui-ci parmi les règles de traitement (100) stockées dans la première table ;
une deuxième table gérant une condition prédéterminée pour se référer à la première table ; et
une unité de mesure de valeur statistique mesurant une valeur statistique comparée à la condition prédéterminée ;
dans lequel l'unité de traitement de paquets (33) détermine si se référer à la première table sur la base de la condition prédéterminée ; et
dans lequel la deuxième table stocke une règle de traitement (100) pour déterminer si se référer à la première table sur la base de la valeur statistique.

2. Appareil de communication (30, 30A) selon la revendication 1 ;
dans lequel l'unité de traitement de paquets (33) détermine si se référer à la première table en comparant la valeur statistique à la condition prédéterminée.

3. Appareil de communication (30, 30A) selon la revendication 1 ou 2 ;
dans lequel la condition prédéterminée est un seuil prédéterminé, et l'unité de traitement de paquets (33) se réfère à la première table et traite un paquet jusqu'à ce que la valeur statistique dépasse le seuil.

4. Appareil de communication (30, 30A) selon l'une quelconque des revendications 1 à3;
dans lequel la deuxième table stocke une pluralité de règles de traitement (100) pour déterminer si se référer à la première table sur la base de la condition prédéterminée, et chacune de la pluralité de règles de traitement (100) correspond à une source de paquet.

5. Appareil de communication (30, 30A) selon l'une quelconque des revendications 1 à4;
dans lequel l'unité de mesure de valeur statistique mesure une valeur statistique comparée à la condition prédéterminée par source.

6. Appareil de communication (30, 30A) selon l'une quelconque des revendications 1 à5;
dans lequel l'unité de mesure de valeur statistique mesure une valeur statistique correspondant au traitement de paquets exécuté sur la base d'une règle de traitement (100) stockée dans la première table.

7. Appareil de communication (30, 30A) selon l'une quelconque des revendications 1 à6;
dans lequel l'unité de mesure de valeur statistique mesure une valeur statistique correspondant au temps qui s'écoule après l'établissement d'une règle de traitement (100) dans la première table.

8. Système de communication, comprenant :
un appareil de commande (20, 20A, 20B) générant une/des règle(s) de traitement (100) pour un/des paquet(s) ; et
un appareil de communication (30, 30A) ;
dans lequel l'appareil de communication (30, 30A), comprend :
une première table stockant des règles de traitement (100) transmises d'un appareil de commande (20, 20A, 20B) ;
une unité de traitement de paquets (33) traitant un paquet entrant sur la base d'une règle de traitement (100) correspondant à celui-ci parmi les règles de traitement (100) stockées dans la première table ;
une deuxième table gérant une condition prédéterminée pour se référer à la première table ; et
une unité de mesure de valeur statistique mesurant une valeur statistique comparée à la condition prédéterminée ;
dans lequel l'unité de traitement de paquets (33) détermine si se référer à la première table sur la base de la condition prédéterminée ; et
dans lequel la deuxième table stocke une règle de traitement (100) pour déterminer si se référer à la première table sur la base de la valeur statistique.

9. Procédé de commande de communication, comprenant les étapes consistant à :
stocker des règles de traitement (100) transmises d'un appareil de commande (20, 20A, 20B) dans une première table ;
traiter un paquet entrant sur la base d'une règle de traitement (100) correspondant à celui-ci parmi les règles de traitement stockées dans la première table ;
faire qu'une deuxième table gère une condition prédéterminée pour se référer à la première table ;
mesurer une valeur statistique comparée à la condition prédéterminée ;
déterminer si se référer à la première table sur la base de la condition prédéterminée ; et
déterminer, sur la base d'une règle de traitement (100) stockée dans la deuxième table, si se référer à la première table sur la base de la valeur statistique.

10. Programme, comprenant des instructions qui, lorsque le programme est exécuté par un appareil de communication (33), font que l'appareil de communication mettent en oeuvre les étapes consistant à :
stocker des règles de traitement (100) transmises d'un appareil de commande (20, 20A, 20B) dans une première table ;
traiter un paquet entrant sur la base d'une règle de traitement (100) correspondant à celui-ci parmi les règles de traitement stockées dans la première table ;
faire qu'une deuxième table gère une condition prédéterminée pour se référer à la première table ;
mesurer une valeur statistique comparée à la condition prédéterminée ;
déterminer si se référer à la première table sur la base de la condition prédéterminée ; et
déterminer, sur la base d'une règle de traitement (100) stockée dans la deuxième table, si se référer à la première table sur la base de la valeur statistique.
